# FASCICULE DE BREVET EUROPEEN

(11) **EP 0 687 612 B1**
(45) Date de publication et mention de la délivrance du brevet: **29.07.1998**
(21) Numéro de dépôt: 95401331.4
(22) Date de dépôt: 08.06.1995
(51) Int. Cl.: B61D 17/04, B61D 17/08, B62D 31/02

(54) **Véhicule routier ou ferroviaire et son procédé d'assemblage**
Strassen- oder Schienenfahrzeug und dessen Montageverfahren
Road or rail vehicle and its assembling method

(30) Priorité: 13.06.1994 FR 9407196
(43) Date de publication de la demande: 20.12.1995
(73) Titulaire: GEC ALSTHOM TRANSPORT SA, 75116 Paris (FR)
(72) Inventeur: Jeunehomme, Sylvie, F-17220 Salles-Sur-Mer (FR); Evennou, Patrick, F-85240 St Hilaire Des Loges (FR); Hachet, Joel, F-17220 Clavette (FR)
(74) Mandataire: Fournier, Michel

(56) Documents cités:
- EP-A- 0 260 200
- EP-A- 0 544 473
- DE-C- 640 513
- FR-A- 1 048 294

## Description

La présente invention concerne les procédés d'assemblage d'ossature de carrosserie pour véhicules routiers ou ferroviaires pour le transport de passagers et porte, plus particulièrement, sur un véhicule routier ou ferroviaire et son procédé d'assemblage.

Le document US 5 066 067 décrit un véhicule routier comportant un châssis et un pavillon.

Le châssis et le pavillon sont tous deux des éléments de structure unique ne formant qu'une seule cellule.

Le châssis et le pavillon sont maintenus aux moyens de deux faces longitudinales définissant un plan latéral droit et un plan latéral gauche.

Ces deux faces longitudinales sont également des éléments de structure unique ne formant qu'une seule cellule.

Les véhicules de l'art antérieur conçus selon ce mode de réalisation ont pour inconvénients:
- d'exiger pour les véhicules de grandes largeurs, la réalisation de longs éléments de face nécessitant des outillages complets de fabrication et de manipulation,
- de ne pas permettre la réalisation de sous-ensembles élémentaires de face, notamment de baies et de portes totalement intégrées, séparément les uns des autres, avant assemblage final de la caisse, et donc de nécessiter un stade intermédiaire pour réaliser l'élément complet de face,
- de ne pas permettre le démontage localisé d'une partie seulement de la face en cas d'endommagement localisé,
- de ne pas permettre le remplacement d'une porte par une autre porte en s'affranchissant d'un montage et d'un réglage à l'intérieur du véhicule,
- de ne pas permettre une modularité des baies et des portes, sauf en réalisant des ensembles de faces différents,
- le fait que la face est un élément complet et monobloc, celle-ci ne se porte pas à la mixité des matériaux et des techniques.

Le document FR-A-2 407 851 de la société Aluminium Suisse SA décrit une ossature de carrosserie pour véhicule routier ou ferroviaire.

Le véhicule routier ou ferroviaire décrit se compose d'un châssis complexe mécano-soudé en acier, d'une ossature d'habitacle constituée de montants, de battants, de traverses en aluminium assemblés, de panneaux rapportés par collage et de tôles rivées sur traverses en toiture.

Les véhicules de l'art antérieur conçus selon ce mode de réalisation ont pour inconvénients:
- de ne permettre que des zones de liaisons ponctuelles, et non continues, avec le châssis et le pavillon; de telles liaisons ponctuelles n'étant pas suffisamment rigides, pour des applications dans lesquels les matériaux sont très sollicitées, il est nécessaire de recourir à un quadrillage très dense entre montants et traverses,
- de ne pas permettre l'utilisation, pour la partie structurelle des faces, d'autres matériaux que l'aluminium, ou matériaux de type long,
- de ne pas permettre la réalisation de sous-ensembles élémentaires de face et notamment de baies et de portes totalement intégrées, séparément les uns des autres, avant assemblage final de la caisse et donc de nécessiter un stade intermédiaire pour réaliser l'élément complet de face,
- de ne pas permettre le remplacement d'une porte par une autre porte en s'affranchissant d'un montage et d'un réglage à l'intérieur du véhicule,

Les procédés d'assemblage des divers éléments de carrosserie des véhicules routiers ou ferroviaires tels que décrits précédemment ont pour inconvénients:
- de ne pas permettre la réalisation de sous-ensembles élémentaires de face, notamment de baies et de portes totalement intégrées, séparément les uns des autres, avant assemblage final de la caisse, et donc de nécessiter un stade intermédiaire pour réaliser l'élément complet de face,
- de ne pas permettre le remplacement d'une porte par une autre porte en s'affranchissant d'un montage et d'un réglage à l'intérieur du véhicule,
- de ne pas se prêter à la mixité des matériaux et des techniques pour la réalisation des faces.

L'invention a pour objet un véhicule routier ou ferroviaire et son procédé d'assemblage ne présentant pas les inconvénients des véhicules et des procédés d'assemblage de l'art antérieur.

Un autre objet de l'invention est de ne pas faire appel au technique de soudage de manière à éviter les travaux de dressage avant mise en peinture ainsi que l'emploi d'outillages onéreux.

Un autre objet de l'invention est de permettre un pré-équipement poussé des différents ensembles et sous-ensembles de structure avant assemblage final de la caisse.

Un autre objet de l'invention est de pouvoir monter et régler les portes d'accès dans des sous-ensembles de structure et de pouvoir rendre ces sous-ensembles de structure facilement interchangeables sans nécessiter un réglage de la caisse du véhicule.

Un autre objet de l'invention est de permettre à certaines zones de face de ne pas participer à la tenue mécanique de la caisse.

Un autre objet de l'invention est de soustraire ces zones de face aux contraintes et donc d'autoriser une mixité d'emploi des matériaux et des techniques entre les sous-ensembles participant à la structure et les sous-ensembles ne participant pas à la structure.

Un autre objet de l'invention est de permettre un entretien facile et une réparation aisée du véhicule en cas d'accident afin de réduire les durées d'immobilisation des véhicules accidentés.

L'invention a pour objet un véhicule routier ou ferroviaire comportant un châssis et un pavillon, ledit châssis et ledit pavillon étant tous deux des éléments de structure unique ne formant qu'une seule cellule définissant un plan latéral droit et un plan latéral gauche; caractérisé par au moins un cadre structurel disposé dans l'un et l'autre desdits plans latéraux droit ou gauche, solidaire dans sa partie inférieure dudit châssis et dans sa partie supérieure dudit pavillon et caractérisé en ce que chacun lesdits cadres sont les seules structures autoportantes de face dudit véhicule.

Le véhicule routier ou ferroviaire de l'invention satisfait à l'une des caractéristiques suivantes:
- l'un au moins des cadres comprend au moins un ensemble porte;
- l'un au moins des cadres comprend au moins un ensemble baie vitrée;
- l'un au moins des cadres structurels comprend au moins un ensemble panneau;
- les cadres structurels sont des éléments de structure mécano-soudés, usinés, moulés, forgés, en un matériau composite ou en un matériau obtenu au moyen de toute autre technique appropriée;
- les cadres structurels sont assemblés au châssis et au pavillon par boulonnage ou rivetage sur la totalité de leur largeur, permettant ainsi une liaison continue extrêmement rigide;
- les cadres structurels et leurs ensembles sont, notamment, peints, réglés, aménagés et/ou habillés avant assemblages desdits cadres structurels audit châssis et audit pavillon.

L'invention a également pour objet un procédé d'assemblage d'un véhicule routier ou ferroviaire comportant un châssis et un pavillon, ledit châssis et ledit pavillon étant tous deux des éléments de structure unique ne formant qu'une seule cellule définissant un plan latéral droit et un plan latéral gauche; caractérisé en ce que au moins un cadre structurel est disposé dans l'un et l'autre desdits plans latéraux droit ou gauche, solidaire dans sa partie inférieure dudit châssis et dans sa partie supérieure dudit pavillon de manière à ce que lesdits cadres structurels soient les seules structures auto-portantes de face dudit véhicule.

Le procédé d'assemblage d'un véhicule routier ou ferroviaire de l'invention comporte une étape satisfaisant à l'une des caractéristiques suivantes:
- au moins un ensemble porte est assemblé à l'un au moins desdits cadres;
- au moins un ensemble baie vitrée est assemblé à l'un au moins desdits cadres;
- au moins un ensemble panneau est assemblé à l'un au moins desdits cadres;
- les cadres structurels sont des éléments de structure mécano-soudés, usinés, moulés, forgés, en un matériau composite ou en un matériau obtenu au moyen de toute autre technique appropriée;
- les cadres structurels sont assemblés au châssis et au pavillon par boulonnage ou rivetage sur la totalité de leur largeur, permettant ainsi une liaison continue extrêmement rigide;
- les cadres structurels et leurs ensembles sont, notamment, peints, réglés, aménagés et/ou habillés avant assemblages desdits cadres structurels audit châssis et audit pavillon.

Les avantages du véhicule et de son procédé d'assemblage selon l'invention sont:
- de permettre des longueurs de liaison importantes entre cadres structurels et châssis, d'une part, et entre cadres structurels et pavillons, d'autres part, permettant d'assurer une grande rigidité de la cellule ainsi formée,
- la possibilité d'équiper complètement les cadres structurels avant assemblage final de la cellule avec un intérêt particulier pour les cadres structurels de portes d'accès, lesdites portes d'accès étant totalement réglées sur le cadre,
- l'interchangeabilité aisée et rapide des cadres, la cellule étant formée,
- l'interchangeabilité aisée et rapide des modules de face non structurelles entre cadres, la cellule étant formée,
- les modules de face non structurels entre cadres structurels sont également complètement équipés soit d'une baie, soit d'un panneau, avant assemblage de la caisse,
- le fractionnement du plan latéral droit et du plan latéral gauche en sous-ensembles que sont les cadres structurels et les modules non structurels permet de générer un effet de série pour ces sous-ensembles,
- le fractionnement permet de limiter les outillages et les moyens de production à des sous-ensembles de petites dimensions,
- le fractionnement du plan latéral droit et du plan latéral gauche en cadres structurels et en modules non structurels permet de faire appel, pour l'une ou l'autre de ces applications, à des techniques d'obtention différentes pour optimisation de la technique aux contraintes rencontrées,
- les cadres structurels peuvent, à interface égal dans la cellule complète, être équipés soit d'une porte, soit d'une baie, soit d'un panneau, la technique proposée permettant d'obtenir une large gamme de versions d'agencement d'où la notion de modularité,
- les cadres étant facilement interchangeables et pouvant être équipés soit d'une porte, soit d'une baie, soit d'un panneau, il est ainsi permis de modifier aisément l'agencement des véhicules au cour de leur vie,
- les modules de face entre cadres structurels étant aisément interchangeables, il est aisé de modifier le design du véhicule au cours de sa vie,
- les divers éléments de la cellule (châssis, pavillon, cadres structurels et modules de faces) étant totalement équipés indépendamment les uns des autres et étant fabriqués en parallèle et non en série, il y a réduction du temps de cycle de fabrication.

Un autre avantage de l'invention est qu'il permet de minimiser le temps de travail effectué à l'intérieur du véhicule.

D'autres caractéristiques et avantages de l'invention seront mieux compris avec la description d'un exemple de réalisation d'un véhicule selon l'invention en se référant aux dessins annexés sur lesquels:

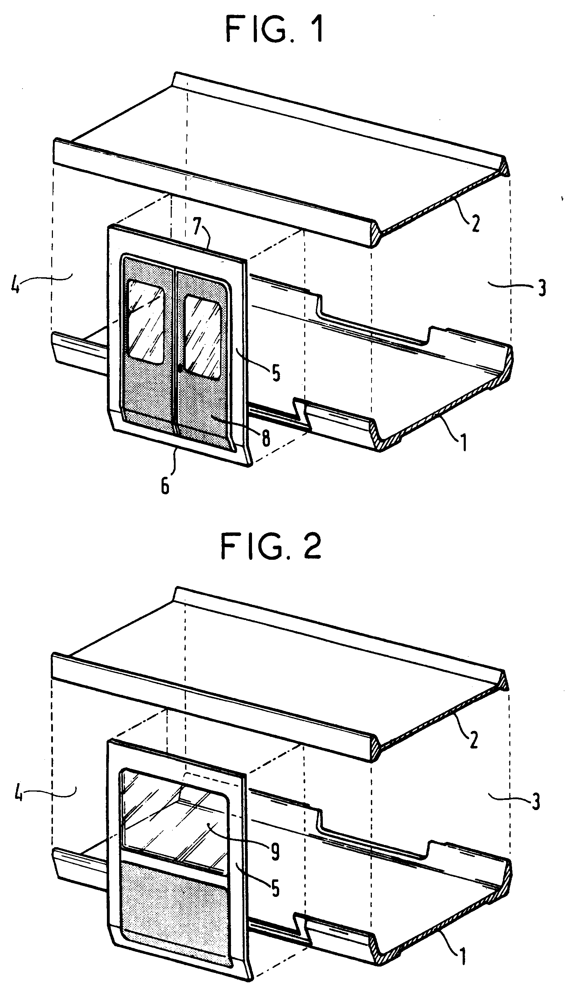

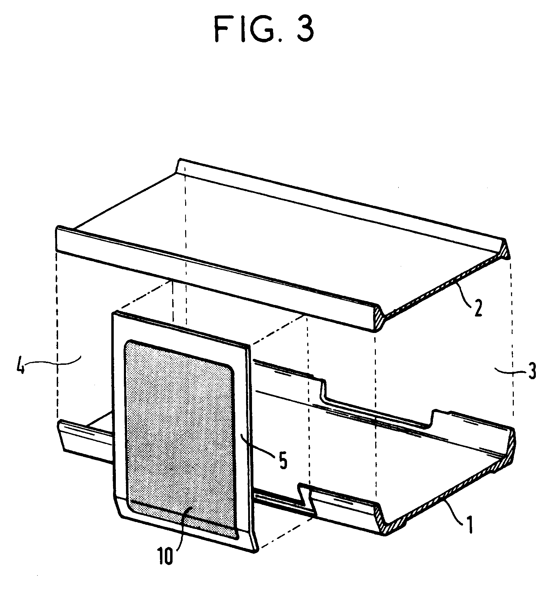

- Les figures 1 à 3 représentent des vues partielles éclatées en perspective d'un véhicule assemblé conformément au procédé de l'invention.

Le véhicule routier ou ferroviaire représenté à ces figures 1 à 3 comporte un châssis 1 et un pavillon 2.

Le châssis et le pavillon sont tous deux des éléments de structure unique ne formant qu'une seule cellule ou un seul bloc.

Le châssis et le pavillon une fois assemblés définissent un plan latéral droit 3 et un plan latéral gauche 4.

Conformément à l'invention, au moins un cadre structurel 5 est disposé dans l'un et l'autre plan latéral droit 3 ou gauche 4 et est solidaire dans sa partie inférieure 6 du châssis 1 et dans sa partie supérieure 7 du pavillon 2.

De plus, les cadres 5 sont les seules structures autoportantes du véhicule.

Conformément à une caractéristique secondaire de l'invention, l'un au moins des cadres 5 comprend au moins un ensemble porte 8 ou au moins un ensemble baie vitrée 9 ou encore au moins un ensemble panneau 10.

D'une manière générale, les cadres 5 sont des éléments de structure mécano-soudés, usinés, moulés, forgés, en un matériau composite ou en un matériau obtenu au moyen de toute autre technique appropriée.

Les cadres 5 sont assemblés, au châssis et au pavillon, par boulonnage ou rivetage ou tout autre moyen d'assemblage approprié.

Enfin, les cadres 5 et leurs ensembles 8, 9, 10 sont, notamment, peints, réglés, aménagés et/ou habillés avant assemblages des cadres 5 au châssis 1 et au pavillon 2.

Le véhicule routier ou ferroviaire de l'invention est donc constitué d'éléments peints, réglés, aménagés et/ou habillés avant que chacun de ces éléments ne soit assemblé.

Le châssis et le pavillon du véhicule sont peints avant assemblage et sont totalement équipés de leurs aménagements respectifs et testés.

Les cadres et ensembles porte, baie vitrée ou panneau sont préalablement peints et comportent tout les éléments et aménagements nécessaires à leur fonctionnement.

Les ensembles porte sont réglés sur leurs cadres respectifs avant que ces derniers ne soient assemblés.

Le véhicule peut comprendre plusieurs cadres et ensembles porte, baie vitrée ou panneau.

Les éléments et aménagements sont par exemples des voussoirs, l'éclairage, la ventilation et l'habillage intérieur.

Une ossature légère de face, non travaillante, peut être fixée entre les cadres de manière à pouvoir recevoir des panneaux d'habillage.

Des baies vitrées peuvent également être fixées sur une structure légère de manière à former les faces du véhicule, par exemple par collage.

Des panneaux bas et hauts facilement interchangeables peuvent également être fixés sur une structure légère par collage, boulonnage ou encliquetage.

Des couvre-joints sont fixés au moyens de clips aux endroits opportuns.

Des modules d'extrémités sont rapportés par boulonnage ou rivetage ou tout autre moyen d'assemblage approprié.

L'invention porte également sur un procédé d'assemblage d'un véhicule routier ou ferroviaire.

Ce véhicule routier ou ferroviaire comporte un châssis 1 et un pavillon 2, le châssis et le pavillon étant tous deux des éléments de structure unique ne formant qu'une seule cellule et définissant un plan latéral droit 3 et un plan latéral gauche 4.

De plus, au moins un cadre structurel 5 est disposé dans l'un et l'autre de ces plans latéraux droit 3 ou gauche 4, solidaire dans sa partie inférieure 6 du châssis 1 et dans sa partie supérieure 7 du pavillon 2 de manière à ce que les cadres 5 soient les seules structures autoportantes du véhicule.

Toujours selon le procédé de l'invention, au moins un ensemble porte 8 ou au moins un ensemble baie vitrée 9 ou encore au moins un ensemble panneau 10 est assemblé à l'un au moins des cadres 5.

Comme défini précédemment, les cadres 5 sont des éléments de structure mécano-soudés, usinés, moulés, forgés, en un matériau composite ou en un matériau obtenu au moyen de toute autre technique appropriée.

Les cadres sont assemblés, sur le châssis 1 et le pavillon 2 du véhicule, par boulonnage ou rivetage ou tout autre moyen d'assemblage approprié.

Enfin, les cadres 5 et leurs ensembles 8, 9, 10 sont, notamment, peints, réglés, aménagés et/ou habillés avant assemblages des cadres 5 au châssis 1 et au pavillon 2.

## Revendications

1. Véhicule routier ou ferroviaire comportant un châssis (1) et un pavillon (2), ledit châssis et ledit pavillon étant tous deux des éléments de structure unique ne formant qu'une seule cellule et maintenus au moyen de deux faces longitudinales définissant un plan latéral droit (3) et un plan latéral gauche (4); caractérisé par au moins un cadre structurel (5) disposé dans l'un et l'autre desdits plans latéraux droit (3) ou gauche (4), solidaire dans sa partie inférieure (6) dudit châssis (1) et dans sa partie supérieure (7) dudit pavillon (2) et caractérisé en ce que chacun desdits cadres (5) sont les seules structures autoportantes de face dudit véhicule.

2. Véhicule selon la revendication 1; dans lequel l'un au moins des cadres (5) comprend au moins un ensemble porte (8).

3. Véhicule selon la revendication 1; dans lequel l'un au moins des cadres (5) comprend au moins un ensemble baie vitrée (9).

4. Véhicule selon la revendication 1; dans lequel l'un au moins des cadres (5) comprend au moins un ensemble panneau (10).

5. Véhicule selon l'une quelconque des revendications 1 à 4; dans lequel les cadres (5) sont des éléments de structure mécano-soudés, usinés, moulés, forgés, en un matériau composite ou en un matériau obtenu au moyen de toute autre technique appropriée.

6. Véhicule selon l'une quelconque des revendications 1 à 4; dans lequel les cadres (5) sont assemblés, sur ledit châssis (1) et ledit pavillon (2) du véhicule, par boulonnage ou rivetage sur la totalité de leur largeur.

7. Véhicule selon l'une quelconque des revendications 1 à 6, dans lequel les cadres (5) et leurs ensembles (8, 9, 10) sont, notamment, peints, réglés, aménagés et/ou habillés avant assemblages desdits cadres (5) audit châssis (1) et audit pavillon (2).

8. Procédé d'assemblage d'un véhicule routier ou ferroviaire comportant un châssis (1) et un pavillon (2), ledit châssis et ledit pavillon étant tous deux des éléments de structure unique ne formant qu'une seule cellule et maintenus au moyen de deux faces longitudinales définissant un plan latéral droit (3) et un plan latéral gauche (4); caractérisé en ce que au moins un cadre structurel (5) est disposé dans l'un et l'autre desdits plans latéraux droit (3) ou gauche (4), solidaire dans sa partie inférieure (6) dudit châssis (1) et dans sa partie supérieure (7) dudit pavillon (2) de manière à ce que lesdits cadres (5) soient les seules structures autoportantes de face dudit véhicule.

9. Procédé selon la revendication 1; dans lequel au moins un ensemble porte (8) est assemblé à l'un au moins desdits cadres (5).

10. Procédé selon la revendication 1; dans lequel au moins un ensemble baie vitrée (9) est assemblé à l'un au moins desdits cadres (5).

11. Procédé selon la revendication 1; dans lequel au moins un ensemble panneau (10) est assemblé à l'un au moins desdits cadres (5).

12. Procédé selon l'une quelconque des revendications 8 à 11; dans lequel les cadres (5) sont des éléments de structure mécano-soudés, usinés, moulés, forgés, en un matériau composite ou en un matériau obtenu au moyen de toute autre technique appropriée.

13. Procédé selon l'une quelconque des revendications 8 à 12; dans lequel lesdits cadres sont assemblés, sur ledit châssis (1) et ledit pavillon (2) du véhicule, par boulonnage ou rivetage sur la totalité de leur largeur.

14. Procédé selon l'une quelconque des revendications 8 à 13; dans lequel les cadres (5) et leurs ensembles (8, 9, 10) sont, notamment, peints, réglés, aménagés et/ou habillés avant assemblages desdits cadres (5) audit châssis (1) et audit pavillon (2).

## Claims

1. A rail or road vehicle including a chassis (1) and a roof (2), said chassis and said roof both being structural elements, each of which forms a single unit only and each is held by means of two longitudinal faces defining a right side plane (3) and a left side plane (4); said vehicle being characterized in that at least one structural frame (5) is disposed in each of said side planes (3, 4), and is secured at its bottom (6) to said chassis (1) and at its top (7) to said roof (2), and in that said frames (5) are the only self-supporting face structures of said vehicle.

2. A vehicle according to claim 1; in which at least one of the frames (5) includes at least one door assembly (8).

3. A vehicle according to claim 1; in which at least one of the frames (5) includes at least one glazed window assembly (9).

4. A vehicle according to claim 1; in which at least one of the frames (5) includes at least one panel assembly (10).

5. A vehicle according to any one of claims 1 to 4; in which the frames (5) are structural elements that are welded, machined, molded, or forged from a composite material, or from a material obtained by any other suitable technique.

6. A vehicle according to any one of claims 1 to 4; in which the frames (5) are fastened to said chassis (1) and to said roof (2) of the vehicle by being bolted or riveted over their entire widths.

7. A vehicle according to any one of claims 1 to 6; in which the frames (5) and their assemblies (8, 9, 10) are, in particular, painted, adjusted, and provided with fittings and/or trim before said frames (5) are fastened to said chassis (1) and to said roof (2).

8. A method of assembling a rail or road vehicle including a chassis (1) and a roof (2), said chassis and said roof both being structural elements, each of which forms a single unit only and each is held by means of two longitudinal faces defining a right side plane (3) and a left side plane (4); said method being characterized in that at least one structural frame (5) is disposed in each of said side planes (3, 4), and is secured at its bottom (6) to said chassis (1) and at its top (7) to said roof (2) so that said frames (5) are the only self-supporting face structures of said vehicle.

9. A method according to claim 8; in which at least one door assembly (8) is mounted in at least one of said frames (5).

10. A method according to claim 8; in which at least one glazed window assembly is mounted in at least one of said frames (5).

11. A method according to claim 8; in which at least one panel assembly is mounted in at least one of said frames (5).

12. A method according to any one of claims 8 to 11; in which the frames (5) are structural elements (5) that are welded, machined, molded, or forged from a composite material or from a material obtained by means of any other suitable technique.

13. A method according to any one of claims 8 to 12; in which said frames are fastened to said chassis (1) and to said roof (2) of the vehicle by being bolted or riveted over their entire widths.

14. A method according to any one of claims 8 to 13; in which the frames (5) and their assemblies (8, 9, 10) are, in particular, painted, adjusted, and provided with fittings and/or trim before said frames (5) are fastened to said chassis (1) and to said roof (2).

## Patentansprüche

1. Straßen- oder Schienenfahrzeug, das ein Fahrgestell (1) und ein Karosserieoberteil (2) umfasst, wobei das Fahrgestell und das Karosserieoberteil beide Elemente einer einheitlichen Struktur sind, die nur eine einzige Zelle bildet und mittels zweier Längsseiten gehalten ist, die eine rechte Seitenfläche (3) und eine linke Seitenfläche (4) definieren, **gekennzeichnet durch** wenigstens einen Strukturrahmen (5), der in der einen und der anderen der Seitenflächen, der rechten (3) oder der linken (4), angeordnet ist( in seinem unteren Bereich (6) mit dem Fahrgestell (1) und in seinem oberen Bereich (7) mit dem Karosserieoberteil (2) fest verbunden ist, und dadurch gekennzeichnet, dass jeweils die Rahmen (5) die einzigen selbsttragenden Strukturen der Seite des Fahrzeugs sind.

2. Fahrzeug nach Anspruch 1, bei dem wenigstens einer der Rahmen (5) wenigstens eine Tür-Baugruppe (8) umfasst.

3. Fahrzeug nach Anspruch 1, bei dem wenigstens einer der Rahmen (5) wenigstens eine verglaste Fensteröffnungs-Baugruppe (9) umfasst.

4. Fahrzeug nach Anspruch 1, bei dem wenigstens einer der Rahmen (5) wenigstens eine Platten-Baugruppe (10) umfasst.

5. Fahrzeug nach einem der Ansprüche 1 bis 4, bei dem die Rahmen (5) mechanisch geschweißte, gefräste, gegossene, geschmiedete, aus einem Verbundmaterial oder einem mittels einer beliebigen anderen geeigneten Technik erhaltenen Material bestehende Strukturelemente sind.

6. Fahrzeug nach einem der Ansprüche 1 bis 4, bei dem die Rahmen (5) an dem Fahrgestell (1) und dem Karosserieoberteil (2) durch Schrauben oder Nieten auf ihrer gesamten Breite montiert sind.

7. Fahrzeug nach einem der Ansprüche 1 bis 6, bei dem die Rahmen (5) und ihre Baugruppen (8, 9, 10) vor der Montage dieser Rahmen (5) an dem Fahrgestell (1) und dem Karosserieoberteil (2) insbesondere gestrichen, eingestellt, innen ausgebaut und/oder verkleidet sind.

8. Verfahren zur Montage eines Straßen- oder Schienenfahrzeugs, das ein Fahrgestell (1) und ein Karosserieoberteil (2) umfasst, wobei das Fahrgestell und das Karosserieoberteil beide Elemente einer einheitlichen Struktur sind, die nur eine einzige Zelle bildet und miptels zweier Längsseiten gehalten ist, die eine rechte Seitenfläche (3) und eine linke Seitenfläche (4) definieren, dadurch gekennzeichnet, dass wenigstens ein Strukturrahmen (5) in der einen und der anderen der Seitenflächen, der rechten (3) oder der linken (4), in seinem unteren Bereich (6) mit dem Fahrgestell (1) und in seinem oberen Bereich (7) mit dem Karosserieoberteil (2) fest verbunden angeordnet wird, derart, dass die Rahmen (5) die einzigen selbsttragenden Strukturen der Seite des Fahrzeugs sind.

9. Verfahren nach Anspruch 8, bei dem wenigstens eine Tür-Baugruppe (8) an wenigstens einem der Rahmen (5) montiert wird.

10. Verfahren nach Anspruch 8, bei dem wenigstens eine verglaste Fensteröffnungs-Baugruppe (9) an wenigstens einem der Rahmen (5) montiert wird.

11. Verfahren nach Anspruch 8, bei dem wenigstens eine Platten-Baugruppe (10) an wenigstens einem der Rahmen (5) montiert wird.

12. Verfahren nach einem der Ansprüche 8 bis 11, bei dem die Rahmen (5) mechanisch geschweißte, gefräste, gegossene, geschmiedete, aus einem Verbundmaterial oder einem mittels einer beliebigen anderen geeigneten Technik erhaltenen Material bestehende Strukturelemente sind.

13. Verfahren nach einem der Ansprüche 8 bis 12, bei dem die Rahmen (5) an dem Fahrgestell (1) und dem Karosserieoberteil (2) durch Schrauben oder Nieten auf ihrer gesamten Breite montiert werden.

14. Verfahren nach einem der Ansprüche 8 bis 13, bei dem die Rahmen (5) und ihre Baugruppen (8, 9, 10) vor der Montage dieser Rahmen (5) an dem Fahrgestell (1) und dem Karosserieoberteil (2) insbesondere gestrichen, eingestellt, innen ausgebaut und/oder verkleidet werden.
